# EUROPEAN PATENT SPECIFICATION

(11) **EP 4 062 328 B1**
(45) Date of publication and mention of the grant of the patent: **08.07.2026**
(21) Application number: 19953479.3
(22) Date of filing: 20.11.2019
(51) Int. Cl.: G06N 5/04, G06Q 30/06

(54) **TECHNIQUES FOR LEVERAGING POST-TRANSACTION DATA FOR PRIOR TRANSACTIONS TO ALLOW USE OF RECENT TRANSACTION DATA**
VERFAHREN ZUR NUTZUNG VON POSTTRANSAKTIONSDATEN FÜR VORHERIGE TRANSAKTIONEN ZUR VERWENDUNG KÜRZLICHER TRANSAKTIONSDATEN
TECHNIQUES D'EXPLOITATION DE DONNÉES POST-TRANSACTION POUR DES TRANSACTIONS ANTÉRIEURES POUR PERMETTRE L'UTILISATION DE DONNÉES DE TRANSACTION RÉCENTES

(43) Date of publication of application: 28.09.2022
(73) Proprietor: PayPal, Inc., San Jose CA 95131 (US)
(72) Inventor: LIN, Ying, Shanghai 200122 (CN); ZHANG, Jiaqi, Shanghai 200127 (CN); WANG, Zhen, Shanghai 200127 (CN); MO, Wenkai, San Jose, California 95131 (US)
(74) Representative: Müller-Boré & Partner Patentanwälte PartG mbB
(86) International application number: PCT/CN2019/119675
(87) International publication number: WO 2021/097702

(56) References cited:
- US-A1- 2007 179 849
- US-A1- 2009 244 291
- US-A1- 2016 335 432
- US-A1- 2018 053 105
- US-A1- 2018 158 552
- US-A1- 2019 207 821
- US-B1- 6 330 546

## Description

### BACKGROUND

### Technical Field

This disclosure relates generally to processing electronic transactions, and, more specifically, to techniques for training a transaction classifier to classify transactions, e.g., for transaction security.

### Description of the Related Art

Fraudulent electronic transactions may cause substantial loss and security vulnerabilities. Transactions identified as fraudulent may be appropriately labeled and used to detect and address subsequent fraudulent transactions. For example, using traditional techniques, a security system may classify transactions using a model that is trained based on pre-transaction information from older transactions for which labels are known. Prior art document US2016/335432A1 describes a computer security to automatically classify target objects using a cascade of trained classifiers, for applications including malware, spam, and fraud detection. The cascade comprises several levels, each level including a set of classifiers. Classifiers are trained in the predetermined order of their respective levels. Each classifier is trained to divide a corpus of records into a plurality of record groups so that a substantial proportion of the records in one such group are members of the same class. Between training classifiers of consecutive levels of the cascade, a set of training records of the respective group is discarded from the training corpus. US2009/244291A1 describes a camera system comprising an image capturing device and an object classification module connected to the image capturing device. The image capturing device has a field of view and produces image data representing an image of the field of view. The object classification module is operable to determine whether or not an object in an image is a member of an object class. The object classification module includes N decision steps configured in a cascade configuration. US2007/179849A1 describes a mechanism that facilitates an advertising architecture for ranking publishers of ads. A mechanism is provided to confirm transactions that occur between a customer and a merchant as well as an indication of which ad publisher made the referral. Accordingly, the performance of an ad displayed by a publisher can be assessed, and employed in the pricing scheme for displaying the ad. The ad publisher performance ratio can be relative to other ad publishers and can be employed with a pay-per-click or pay-per impression billing structure.

### BRIEF DESCRIPTION OF THE DRAWINGS

Fig. 1 is a block diagram illustrating an example training model that involves two different training procedures to leverage post-transaction data for older transactions to train a classifier using more recent transactions, according to some embodiments.
Fig. 2 is a diagram illustrating an example timeline for transaction data used in training classifiers, according to some embodiments.
Fig. 3 is a block diagram illustrating a more detailed example of a training model, according to some embodiments.
Fig. 4 is a diagram illustrating example ensemble techniques that use both a traditional classifier and a classifier trained using disclosed techniques, according to some embodiments.
Fig. 5 is a diagram illustrating a detailed example transaction timeline, according to some embodiments.
Fig. 6 is a flow diagram illustrating a method for generating a trained transaction classifier based on recent transactions, including generating labels for recent transactions by leveraging post-transaction data for older transactions, according to some embodiments.
Fig. 7 is a block diagram illustrating an example computing device, according to some embodiments.

As used herein, the terms "first," "second," etc. are used as labels for nouns that they precede, and do not imply any type of ordering (e.g., spatial, temporal, logical, etc.) unless specifically stated. For example, in a computing system having multiple user accounts, the terms "first" and "second" user accounts can be used to refer to any users. In other words, the "first" and "second" user accounts are not limited to the initial two created user accounts, for example. When used herein, the term "or" is used as an inclusive or and not as an exclusive or. For example, the phrase "at least one of x, y, or z" means any one of x, y, and z, as well as any combination thereof (e.g., x and y, but not z or x, y, and z).

As used herein, the term "processing element" refers to various elements configured to execute program instructions (or portions thereof or combinations thereof). Processing elements include, for example, circuits such as an ASIC (Application Specific Integrated Circuit), portions or circuits of individual processor cores, entire processor cores, individual processors, programmable hardware devices such as a field programmable gate array (FPGA), and/or larger portions of systems that include multiple processors, as well as any combinations thereof.

### DETAILED DESCRIPTION

Techniques are disclosed for leveraging post-transaction data to train machine learning models using immature transaction data. "Immature" transactions are those for which relevant labels are not yet known or have not yet been generated, and are typically fairly recent. For example, these transactions may have been completed, but may still be within a review interval, after which they may be marked as proper or fraudulent. In contrast, relevant classifier labels are known for mature transactions. Traditionally, data from immature transactions have not been used to train machine learning classifiers. Further, traditional training techniques typically do not utilize post-transaction data.

In contrast, in disclosed embodiments, post-transaction data for mature and immature transactions is used to generate labels for a subset of high-confidence immature transactions. These labels are then used to train one or more classifiers to classify transactions in a production environment. As discussed in further detail below, this may involve multiple training procedures using different transaction classifiers.

In some situations, the disclosed techniques may improve identification of fraudulent transactions by incorporating immature transactions into classifier training. For example, consider a set of transactions that includes transactions A, B, and C, where transaction A is a fraudulent transaction that is mature (e.g., has a known label) and is relatively old compared to transactions B and C, transaction B is immature and relatively recent, and transaction C is a current transaction being categorized. Using traditional techniques, transaction B would not be used to train a classification model prior to transaction C due to labels being unknown for transaction B. In disclosed techniques, however, post-transaction data for transaction A may be leveraged to generate a label for transaction B, which may be used to train a transaction classifier to classify production transactions, such as transaction C.

Leveraging post-transaction data for older transactions to generate labels for recent transactions that are then used to train a classification model may advantageously allow the trained classification model to classify production transactions (e.g., determine whether transactions are fraudulent) more accurately than traditional techniques. This may allow a security system to initiate security actions for detected fraudulent transactions, such as preventing the transactions from occurring, flagging the transactions for additional review or classification, or prompting additional authentication for the transactions.

### Multi-classifier Training Example

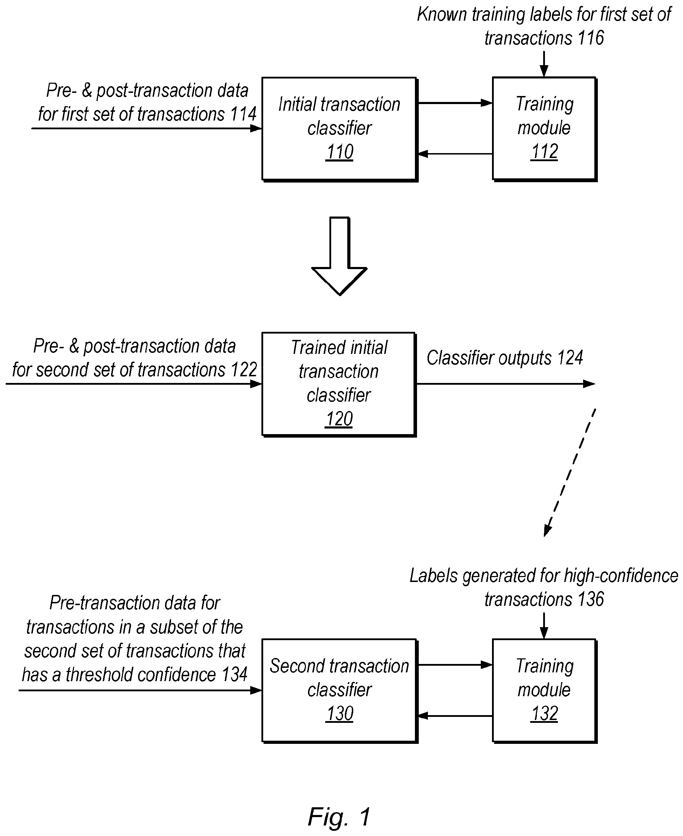

Fig. 1 is a block diagram illustrating an example training technique with two different training elements to leverage post-transaction data for older transactions to train a classifier using more recent transactions, according to some embodiments. In the illustrated embodiment, a training system trains an initial transaction classifier 110 and uses the initial transaction classifier to generate labels for immature transactions, which are then used to train a second transaction classifier 130.

Initial transaction classifier 110, in the illustrated embodiment, receives pre- and post-transaction data for a first set of transactions 114 and provides classifications for transactions in the first set to training module 112. In some embodiments, the first set of transactions 114 includes one or more older transactions that are completed a threshold amount of time prior to the current time and for which labels have been generated.

Training module 112, in the illustrated embodiment, compares known training labels 116 for the first set of transactions 114 with the output of classifier 110. Based on the comparison, training module 112 provides feedback to initial transaction classifier 110. In some embodiments, the feedback from training module 112 includes one or more adjusted training weights for classifier 110. For example, classifier 110 may be a neural network that generates output values between 0 and 1 for various transactions and training module 112 may adjust training weights based on the difference between the output values and the labels. In other embodiments, any of various types of feedback control may be implemented to train various classifier types.

As used herein, the term "pre-transaction information" refers to information available to a classifier prior to the relevant pending transaction being complete. Thus, pre-transaction information may include information received after the transaction has been initiated but before the transaction is complete. Pre-transaction information may include, for example, data from transactions that are pending or complete before completion of the current pending transaction and other non-transaction information that is independent of the transaction such as information associated with a user who initiated the transaction (e.g., user activity, user location, etc.). Various pre or post-transaction information may be used (with or without pre-processing) to generate features that are input to classifiers 110, 120, or 130.

As used herein, the term "post-transaction information" refers to information that is not available until after the relevant transaction is complete. In some embodiments, post-transaction information includes data for a transaction that is initiated after the current pending transaction is complete. Additionally, post-transaction information may include non-transaction information such as other user activity. Thus, post-transaction information for a particular transaction may include one or more of the following attributes: activity of a user associated with the particular transaction (e.g., on one or more devices), location information of devices involved in the particular transaction (e.g., transaction source and destination), clicking or scrolling activity of the user, currency amount of one or more transactions following the particular transaction, content of the transaction (e.g., monetary or item-based transaction), user information (e.g., username and password), etc. Post-transaction information may be obtained by an administrator of a transaction security system, for example. Speaking generally, various types of data may be categorized as pre or post transaction data based on when it is obtained. Traditionally, because post-transaction data is not available for live transactions being classified, post-transaction data has not been used to train machine learning classifiers.

Trained initial transaction classifier 120, in the illustrated embodiment, receives both pre-and post-transaction data for a second set of transactions 122 (e.g., a set of immature transactions). Classifier 120 then generates classifier outputs 124 that include classification values for transactions in the second set of transactions 122. In some embodiments, a filtering module may filter through classifier outputs 124 to determine a subset of the second set of transactions. In some embodiments, the subset includes transactions in the second set of transactions with classifier output values that satisfy a confidence threshold. For example, the output values for these transactions may be within a threshold difference from one or more expected classifier values.

Second transaction classifier 130, in the illustrated embodiment, receives pre-transaction data for transactions in the subset of the second set of transactions that have a threshold confidence. Based on this input, second transaction classifier 130 generates classifier output values and sends them to training module 132. In some embodiments, classifiers 110 and 130 are trained using similar machine learning techniques. For example, one or more of the following machine learning techniques may be used to train classifiers 110 and 130: neural networks, ensemble methods, regression (e.g., linear or logistic), clustering (e.g., k means), classification (e.g., naive Bayes), etc.

Training module 132, in the illustrated embodiment, receives classifier labels 136 generated for high-confidence transactions included in the subset 134 of the second set of transactions. In some embodiments, a filtering module (e.g., module 322 discussed below) or some other module generates labels for high-confidence transactions based on the output values of trained initial transaction classifier 120. In the illustrated example, training module 132 compares the classifier output values from classifier 130 with the labels 136 for high-confidence transactions. Training module 132 provides training feedback to classifier 130 including adjustments to training weights.

Note that, although the second transaction classifier 130 receives data only for the subset of the second set of transactions in the illustrated embodiment, this classifier may be trained based on various other types of training data in addition, e.g., pre-transaction data from the mature transactions used to train the initial transaction classifier 110. As discussed above, the disclosed techniques may allow second transaction classifier 130 to be trained based on immature transactions, which may improve its accuracy relative to traditional techniques, e.g., by incorporating data from malicious trends earlier than traditional techniques.

### Example Classifier Training using Data from Specified Intervals

Pre- and post-transaction information used to train transaction classifiers and to classify one or more electronic transactions may be obtained from specific time intervals for a particular classification system. For example, a training system may obtain mature transaction data from an earlier time interval than immature transaction data. Note that the specific time intervals from which training data is obtained may vary in length, depending on the training or classifying being performed, transaction volume, etc.

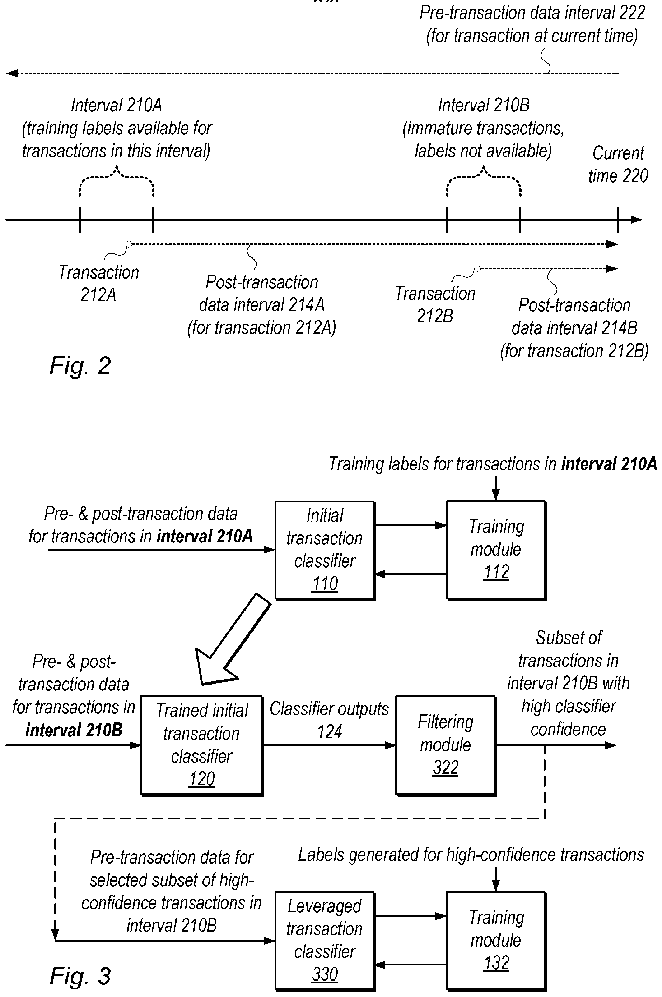

Fig. 2 is a diagram illustrating an example timeline for transaction data used in the training techniques shown in Fig. 3, according to some embodiments (Fig. 3 is a slightly more detailed example of the techniques of Fig. 1). In the illustrated embodiment, a timeline is shown with a current time 220 marked at the rightmost portion of the timeline and two transactions 212A and 212B, which occur in two different time intervals 210A and 210B, marked at different points along the timeline.

Interval 210A, in the illustrated example, includes mature transactions for which training labels are available and interval 210B includes immature transactions for which training labels are not available. Note that intervals 210 may include any number of transactions and that a particular user or account initiating a transaction in interval 210A may also initiate a transaction in interval 210B. In some embodiments, a training system selects interval 210A such that it is a threshold distance in time from interval 210B and such that labels are available (e.g., mature) for transactions within interval 210A. For transaction 212A, within interval 210A, post-transaction data is shown as information that is available within an interval 214A that extends from when transaction 212A is initiated to the current time 220. Similarly, post-transaction data 214 for transaction 212B is shown as information that is available from when transaction 212B is initiated to the current time 220.

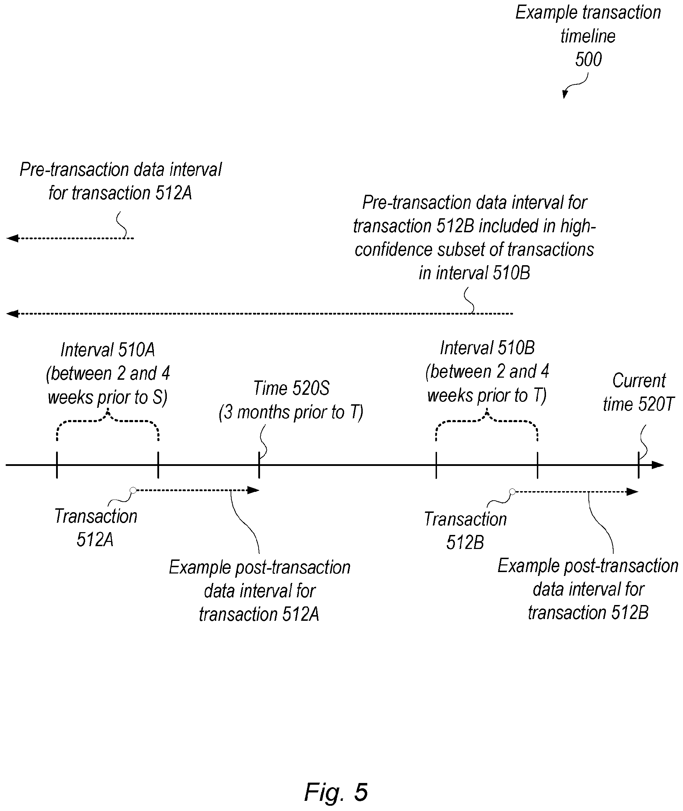

In some embodiments, post-transaction data within interval 214A for transaction 212A used for training is limited to include only transaction information from a similar length of time as the interval 214B from which post-transaction data is available for transaction 212B (e.g., the post-transaction data for transaction 212A is selected from a smaller time interval than that shown in in the illustrated example). Note that Fig. 5, discussed below, includes a more detailed example timeline showing specific time intervals.

Fig. 3 is a block diagram illustrating a more detailed example of the training techniques shown in Fig. 1 using transaction data according to the timeline of Fig. 2, according to some embodiments. In the illustrated embodiment, a filtering module 322 determines a subset of transactions with a high classifier confidence and the training system provides pre-transaction data for the subset to a leveraged transaction classifier 330 during training.

In the illustrated example, initial transaction classifier 110 receives pre- and post-transaction data for transactions in interval 210A (including transaction 212A) and provides classifier output values to training module 112. Classifier 110 receives control signaling from training module 112 based on training labels for transactions in interval 210A. Once classifier 110 satisfies a training threshold, it is referred to as trained initial transaction classifier 120, in the illustrated example. Trained initial transaction classifier 120 receives pre- and post-transaction data for a transaction in interval 210B and provides classifier output to filtering module 322.

Filtering module 322, in the illustrated embodiment, determines classifier output values that satisfy a threshold confidence (these values are associated with a high classifier confidence) and selects a subset of transactions in interval 210B. For example, trained initial transaction classifier 120 may output values between 0 and 1. In this example, classifier output values within the range 0-0.2 and 0.8-1 may meet a confidence threshold, and transactions associated with these high-confidence output values may be included in the subset of transaction selected by filtering module 322. In some embodiments, the filtering module 322 generates labels for transactions in the subset based on the classification values for the transactions. For example, for a particular transaction whose classifier output is 0.2, filtering module 322 assigns a label of 0 to the transaction. Based on the subset of transactions in interval 210B, leveraged transaction classifier 330 receives pre-transaction data for transactions in the selected subset.

Leveraged transaction classifier 330, in the illustrated embodiment, sends classifier output to training module 132 that includes classification values for the subset of transactions. Training module 132 sends training feedback to leveraged transaction classifier 330 based on labels generated for high-confidence transactions (included in the subset selected by filtering module 322). Note that leveraged transaction classifier 330 is one example of the second transaction classifier 130 shown in Fig. 1.

In the illustrated embodiment, an arrow showing potential time intervals in which pre-transaction data 222 may be available for transactions that are initiated at the current time 220. Note that all or a portion of this transaction data may be selected for classifying, using the leveraged transaction classifier 330, one or more transactions that are initiated at or after the current time 220. For example, a portion of the pre-transaction data 222 extending from transaction 212B to transaction 212A may be used by leveraged transaction classifier 330 to classify transactions. Leveraged transaction classifier 330 may be updated periodically, in some embodiments, using transactions from updated time intervals.

Note that various examples herein classify transactions as fraudulent or not, but these examples are discussed for purposes of explanation and are not intended to limit the scope of the present disclosure. In other embodiments, any of various classifications may be implemented.

### Example Classifier Combination

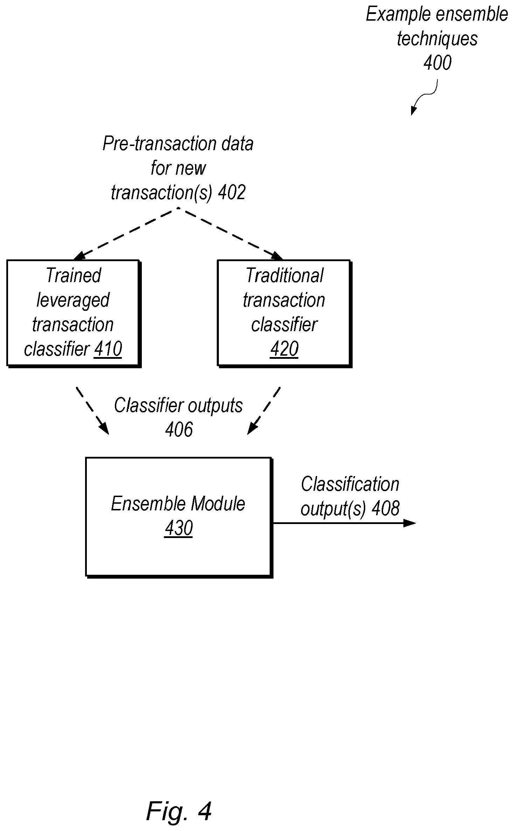

Fig. 4 is a block diagram illustrating ensemble techniques that use both a traditional classifier and a classifier trained using disclosed techniques, according to some embodiments. In the illustrated embodiment, classifier outputs 406 from trained leveraged transaction classifier 410 and traditional transaction classifier 420 are combined by ensemble module 430 to generate classification output(s) 408 for one or more new transaction(s) 402.

Trained leveraged transaction classifier 410, shown in the illustrated example, is one example of leveraged transaction classifier 330, e.g., that has been trained and satisfies one or more training thresholds.

Traditional transaction classifier 420, shown in the illustrated example, is one example of a machine learning model that has been trained using traditional techniques (e.g., without using post-transaction data). Training of classifier 420 may include using pre-transaction data for transactions for which training labels are known. For example, these transactions are typically older transactions relative to a current time, such as those included in interval 210A, shown in Fig. 2. In some embodiments, classifier 420 is trained using the same or similar machine learning techniques to those used to train classifiers 110 and 130.

In the illustrated example, ensemble module 430 receives classifier outputs 406 from classifiers 410 and 420. Based on these outputs 406, module 430 generates one or more classification outputs 408 using one or more ensemble methods. Ensemble module 430 may, for example, analyze the outputs of multiple classifiers and aggregate them to produce an increase in correctly identified classifier outputs relative to the classifier outputs of individual classifiers. For example, a classifier training system may use one or more of the following ensemble methods to combine classifier outputs from two or more of the same or different transaction classifiers: random forest models, bootstrap aggregating, boosting (e.g., Adaboost), Bayesian parameter averaging, Bayesian model combination, etc. The classification output(s) 408 generated by ensemble module 430 may advantageously increase correctly identified transactions relative to labels generated by traditional classifiers, such as classifier 420, for example.

### Example Transaction Timeline

Using traditional transaction classification techniques may identify fraudulent transactions that follow a trend only after a certain time interval (e.g., once transactions that match the trend have matured). For example, labels for transactions are often not available until a month or three months after the transactions occur. Therefore, traditional classification techniques may have a ramp-up time in which fraudulent transactions are not detected. Using the disclosed multi-classifier techniques to leverage post-transaction data for older transactions to generate labels for more recent immature transactions may advantageously allow a security system to detect additional fraudulent transactions that follow an identified trend.

Fig. 5 is a diagram illustrating a detailed example transaction timeline 500 with specific time intervals 510 based on which transaction data is selected for training, according to some embodiments. In the illustrated embodiment, a time 520S that is three months prior to time 520T is shown on a transaction timeline 500 with transactions prior to time 520S being mature (e.g., training labels have been generated for these transactions).

In the illustrated embodiment, interval 510B is between two and four weeks prior to time 520T. Similarly, interval 510A is between two and four weeks prior to 520S and is the same length as interval 510B. In some embodiments, intervals 510A and 510B are different lengths. In the illustrated example, post-transaction data for two different example transactions 512A and 512B, as shown, are selected from intervals of time that are the same length. An arrow illustrating an interval in which pre-transaction data for transaction 512B, however, is shown to span a longer potential length of time than the pre-transaction data associated with transaction 512A. In some embodiments, pre-transaction data for transaction 512B are selected from an interval with the same length as a time interval from which pre-transaction data for transaction 512A are selected. Note that transaction 512B is included in a high-confidence subset of transactions within interval 510B.

In one example situation, a user may create an account and complete a first transaction on May 12^{th}. Using the same account, the user completes a second transaction on May 14^{th} On June 12^{th} a transaction security system initiates a chargeback process for the first transaction and marks this transaction as fraudulent. Using the same account, the user completes a third transaction on June 24^{th}. In this example, characteristics of the third transaction and user activity related to the third transaction are similar to the second transaction. On July 27^{th}, the transaction security system initiates a chargeback process for the second transaction and marks the transaction as fraudulent. Using traditional classification techniques, in this example, the transaction security system may not be able to identify a trend in the first two transactions and classify a third transaction, initiated by this same user, as fraudulent prior to the third transaction being complete. Using disclosed techniques, however, the system may identify the trend of the first two transactions and predict that a third transaction will also be fraudulent, allowing the transaction security system to block subsequent transactions initiated by the user account or other accounts. In this example, the transaction security system may be able to label the second transaction as fraudulent earlier (e.g., prior to June 24^{th}), using the new classifier model and may, therefore, identify the third transaction as fraudulent based on the second transaction being fraudulent.

### Example Method

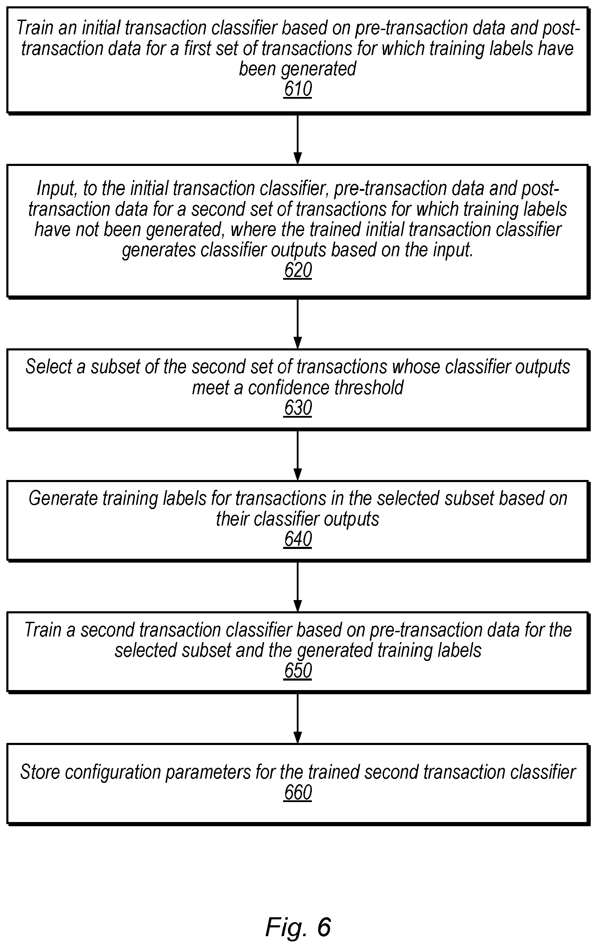

Fig. 6 is a flow diagram illustrating a method for performing security operations based on modified security risk values for one or more accounts, according to some embodiments. The method shown in Fig. 6 may be used in conjunction with any of the computer circuitry, systems, devices, elements, or components disclosed herein, among other devices. In various embodiments, some of the method elements shown may be performed concurrently, in a different order than shown, or may be omitted. Additional method elements may also be performed as desired.

At 610, in the illustrated embodiment, a computer system trains an initial transaction classifier based on pre-transaction data and post-transaction data for a first set of transactions for which training labels have been generated.

At 620, the computer system inputs, to the trained initial transaction classifier, pre-transaction data and post-transaction data for a second set of transactions for which training labels have not been generated, where the trained initial transaction classifier generates classifier outputs based on the input. In some embodiments, transactions in the first set of transactions occur during a first time interval and transactions in the second set of transactions occur in a second time interval that does not overlap with the first time interval, where the second time interval is later in time than the first time interval. In some embodiments, transactions in the second set of transactions occur in a second time interval that begins at least a month after the end of the first time interval. In some embodiments, a transaction in the first time interval occurs at least one month prior to the current time.

In some embodiments, the post-transaction data for the first set of transactions is selected from a first time interval whose length is determined based on a time difference between a transaction in the second set of transactions and the current time. In some embodiments, the first time interval and the second time interval are the same length. For example, post-transaction data used to train the initial transaction classifier and post-transaction data used to train the second classifier are selected from two different time intervals whose lengths are the same.

In some embodiments, pre-transaction data for the first and second set of transactions includes account credentials for an account associated with one or more transactions in the first and second set of transactions, where post-transaction data for at least a first transaction in the second set of transactions includes activity of a user of the account subsequent to the first transaction being complete. In some embodiments, pre-transaction data for at least a first transaction in the second set of transactions includes transaction data associated with one or more transactions that were initiated prior to the first transaction in the second set of transactions, where post-transaction data for at least a first transaction in the second set of transactions includes location information of a user device that initiated the first transaction subsequent to the first transaction being complete. For example, post-transaction data used to generate classifier outputs using the trained initial transaction classifier may include geofencing information for a device of a user who complete transactions being classified by the trained initial transaction classifier. As another example, pre-transaction information for a particular transaction may include information associated with any number of transactions initiated prior to the particular transaction.

At 630, the computer system selects a subset of the second set of transactions whose classifier outputs meet a confidence threshold. For example, classifier outputs that are between 0.8 and 1, and 0 and 0.2 may satisfy the confidence threshold and transactions associated with these outputs may be included in the subset.

At 640, the computer system generates training labels for transactions in the selected subset based on their classifier outputs. In some embodiments, the training labels specify whether transaction in the selected subset are fraudulent.

At 650, the computer system trains a second transaction classifier based on pre-transaction data for the selected subset and the generated training labels. In some embodiments, training the second transaction classifier does not include training based on post-transaction data. In some embodiments, training the second transaction classifier is performed using one or more supervised machine learning techniques. In some embodiments, at least fifty percent of the post-transaction data for transactions in the selected subset is not used to train the second transaction classifier. For example, the second transaction classifier may be used to classify transactions for which post-transaction data is limited or does not exist. Therefore, in this example, training the second transaction classifier is performed with little or no post-transaction data.

At 660, the computer system stores configuration parameters for the trained second transaction classifier. In some embodiments, a transaction processing system classifies, subsequent to the storing, one or more transactions using the trained second transaction classifier. In some embodiments, the one or more transactions are initiated after transactions in the second set of transactions are complete.

In some embodiments, the trained second transaction classifier is usable to predict whether transactions received by a production transaction computer system are fraudulent. In some embodiments, the computer system generates final classifier outputs based on classifier outputs from a plurality of trained transaction classifiers. In some embodiments, the plurality of trained transaction classifiers includes the trained second transaction classifier and a third transaction classifier that is not trained using post-transaction data. For example, the computer system may ensemble the trained second transaction classifier and a traditional transaction classifier (e.g., one that is not trained using post-transaction data) using one or more ensemble methods to generate final classifier outputs.

### Example computing device

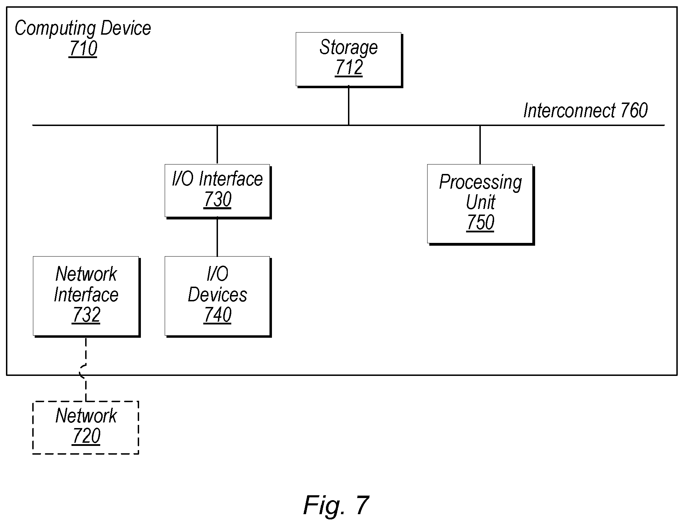

Turning now to Fig. 7, a block diagram of one embodiment of computing device (which may also be referred to as a computing system) 710 is depicted. Computing device 710 may be used to implement various portions of this disclosure. Computing device 710 may be any suitable type of device, including, but not limited to, a personal computer system, desktop computer, laptop or notebook computer, mainframe computer system, web server, workstation, or network computer. As shown, computing device 710 includes processing unit 750, storage 712, and input/output (I/O) interface 730 coupled via an interconnect 760 (e.g., a system bus). I/O interface 730 may be coupled to one or more I/O devices 740. Computing device 710 further includes network interface 732, which may be coupled to network 720 for communications with, for example, other computing devices.

In various embodiments, processing unit 750 includes one or more processors. In some embodiments, processing unit 750 includes one or more coprocessor units. In some embodiments, multiple instances of processing unit 750 may be coupled to interconnect 760. Processing unit 750 (or each processor within 750) may contain a cache or other form of on-board memory. In some embodiments, processing unit 750 may be implemented as a general-purpose processing unit, and in other embodiments it may be implemented as a special purpose processing unit (e.g., an ASIC). In general, computing device 710 is not limited to any particular type of processing unit or processor subsystem.

As used herein, the term "module" refers to circuitry configured to perform specified operations or to physical non-transitory computer readable media that store information (e.g., program instructions) that instructs other circuitry (e.g., a processor) to perform specified operations. Modules may be implemented in multiple ways, including as a hardwired circuit or as a memory having program instructions stored therein that are executable by one or more processors to perform the operations. A hardware circuit may include, for example, custom very-large-scale integration (VLSI) circuits or gate arrays, off-the-shelf semiconductors such as logic chips, transistors, or other discrete components. A module may also be implemented in programmable hardware devices such as field programmable gate arrays, programmable array logic, programmable logic devices, or the like. A module may also be any suitable form of non-transitory computer readable media storing program instructions executable to perform specified operations.

Storage subsystem 712 is usable by processing unit 750 (e.g., to store instructions executable by and data used by processing unit 750). Storage subsystem 712 may be implemented by any suitable type of physical memory media, including hard disk storage, floppy disk storage, removable disk storage, flash memory, random access memory (RAM-SRAM, EDO RAM,

SDRAM, DDR SDRAM, RDRAM, etc.), ROM (PROM, EEPROM, etc.), and so on. Storage subsystem 712 may consist solely of volatile memory, in one embodiment. Storage subsystem 712 may store program instructions executable by computing device 710 using processing unit 750, including program instructions executable to cause computing device 710 to implement the various techniques disclosed herein.

I/O interface 730 may represent one or more interfaces and may be any of various types of interfaces configured to couple to and communicate with other devices, according to various embodiments. In one embodiment, I/O interface 730 is a bridge chip from a front-side to one or more back-side buses. I/O interface 730 may be coupled to one or more I/O devices 740 via one or more corresponding buses or other interfaces. Examples of I/O devices include storage devices (hard disk, optical drive, removable flash drive, storage array, SAN, or an associated controller), network interface devices, user interface devices or other devices (e.g., graphics, sound, etc.).

Various articles of manufacture that store instructions (and, optionally, data) executable by a computing system to implement techniques disclosed herein are also contemplated. The computing system may execute the instructions using one or more processing elements. The articles of manufacture include non-transitory computer-readable memory media. The contemplated non-transitory computer-readable memory media include portions of a memory subsystem of a computing device as well as storage media or memory media such as magnetic media (e.g., disk) or optical media (e.g., CD, DVD, and related technologies, etc.). The non-transitory computer-readable media may be either volatile or nonvolatile memory.

## Claims

1. A method, comprising:
training, by a computer system (710), an initial transaction classifier (110) based on pre-transaction data and post-transaction data for a first set of transactions (114) for which training labels (116) have been generated;
inputting, by the computer system (710) to the trained initial transaction classifier (120), pre-transaction data and post-transaction data for a second set of transactions (122) for which training labels have not been generated, wherein the trained initial transaction classifier (120) generates classifier outputs (124) based on the inputting:
selecting, by the computer system (710), a subset (134) of the second set of transaction: (122) whose classifier outputs (124) from the trained initial transaction classifier (120) meet a confidence threshold;
generating, by the computer system (710), training labels (136) for transactions in the selected subset (134) based on their classifier outputs (124) from the trained initial transaction classifier (120) that meet the confidence threshold:
training, by the computer system (710), a second, different transaction classifie (130) based on pre-transaction data for the selected subset (134) of the second set of transactions (122) whose classifier outputs (124) meet the confidence threshold and the training labels (136) generated for transactions in the selected subset (134) based on the transaction's classifier outputs (124) from the trained initial transaction classifier (120);
storing, by the computer system (710), configuration parameters for the trained second transaction classifier (130); and wherein the trained second transaction classifier (130) is used for classifying transactions.

2. The method of claim 1, further comprising:
classifying, by a transaction processing system, subsequent to the storing, one or more transactions using the trained second transaction classifier.

3. The method of claim 1, wherein the training the second transaction classifier does not include training based on post-transaction data.

4. The method of claim 1, further comprising:
generating, by the computer system, final classifier outputs based on classifier outputs from a plurality of trained transaction classifiers,
wherein the plurality of trained transaction classifiers includes the trained second transaction classifier and a third transaction classifier that is not trained using post-transaction data.

5. The method of claim 1, wherein transactions in the first set of transactions occur during a first time interval and transactions in the second set of transactions occur in a second time interval that does not overlap with the first time interval, wherein the second time interval is later in time than the first time interval.

6. The method of claim 1, wherein the post-transaction data for the first set of transactions is selected from a first time interval whose length is determined based on a time difference between a transaction in the second set of transactions and the current time.

7. A non-transitory computer-readable medium having instructions stored thereon that are executable by a computing device to perform operations comprising:
training an initial transaction classifier based on pre-transaction data and post-transaction data for a first set of transactions for which training labels have been generated;
inputting, to the trained initial transaction classifier, pre-transaction data and post-transaction data for a second set of transactions for which training labels have not been generated, wherein the trained initial transaction classifier generates classifier outputs based on the inputting;
selecting a subset of the second set of transactions whose classifier outputs from the trained initial transaction classifier meet a confidence threshold;
generating training labels for transactions in the selected subset based on their classifier outputs from the trained initial transaction classifier that meet the confidence threshold;
training a second, different transaction classifier based on pre-transaction data for the selected subset of the second set of transactions whose classifier outputs meet the confidence threshold and the training labels generated for transactions in the selected subset based on the transaction's classifier outputs from the trained initial transaction classifier;
storing configuration parameters for the trained second transaction classifier to permit use of the trained second transaction classifier in classifying transactions; and wherein the trained second transaction classifier is used for classifying transactions.

8. The non-transitory computer-readable medium of claim 7, wherein the operations further comprise:
classifying, subsequent to the storing, one or more transactions using the trained second transaction classifier, wherein the one or more transactions are initiated after transactions in the second set of transactions are complete.

9. The non-transitory computer-readable medium of claim 7, wherein the operations further comprise:
generating final classifier outputs based on:
classifier outputs of the trained second transaction classifier; and
classifier outputs of a third transaction classifier that is not trained using post-transaction data;
wherein the generating is performed using one or more ensemble techniques.

10. The non-transitory computer-readable medium of claim 7, wherein transactions in the first set of transactions occur during a first time interval and transactions in the second set of transactions occur in a second time interval that is later in time than the first time interval.

11. The non-transitory computer-readable medium of claim 7, wherein pre-transaction data for the first and second set of transactions includes account credentials for an account associated with one or more transactions in the first and second set of transactions, and wherein post-transaction data for at least a first transaction in the second set of transactions includes activity of a user of the account subsequent to the first transaction being complete.

12. The non-transitory computer-readable medium of claim 7, wherein the training the second transaction classifier is performed using one or more supervised machine learning techniques.

13. A method, comprising:
accessing, by a transaction processing system, transaction data for a transaction; and
classifying one or more transactions, by the transaction processing system using a trained transaction classifier, trained by operations comprising:
training an initial transaction classifier based on pre-transaction data and post-transaction data for a first set of transactions for which training labels have been generated;
inputting, to the trained initial transaction classifier, pre-transaction data and post-transaction data for a second set of transactions for which training labels have not been generated, wherein the initial transaction classifier generates classifier outputs based on the inputting;
selecting a subset of the second set of transactions whose classifier outputs from the trained initial transaction classifier meet a confidence threshold;
generating training labels for transactions in the selected subset based on their classifier outputs from the trained initial transaction classifier that meet the confidence threshold; and
training the transaction classifier based on pre-transaction data for the selected subset of the second set of transactions whose classifier outputs meet the confidence threshold and the training labels generated for transactions in the selected subset based on the transaction's classifier outputs from the trained initial transaction classifier.

14. The method of claim 13, wherein transactions in the first set of transactions occur during a first time interval and transactions in the second set of transactions occur in a second time interval that begins at least a month after the end of the first time interval, and wherein the post-transaction data for the first set of transactions and the post-transaction data for the second set of transactions are selected from two different time intervals whose lengths are the same, wherein the two different time intervals do not overlap.

15. The method of claim 13, wherein pre-transaction data for at least a first transaction in the second set of transactions includes transaction data associated with one or more transactions that were initiated prior to the first transaction in the second set of transactions, and wherein post-transaction data for at least a first transaction in the second set of transactions includes location information of a user device that initiated the first transaction subsequent to the first transaction being complete.

## Patentansprüche

1. Verfahren, umfassend:
Trainieren, durch ein Computersystem (710), eines initialen Transaktionsklassifikators (110) basierend auf Pre-Transaktionsdaten und Post-Transaktionsakten für einen ersten Satz von Transaktionen (114), für die Trainingslabels (116) generiert wurden;
Eingeben, durch das Computersystem (710) in den trainierten initialen Transaktionsklassifikator (120), von Pre-Transaktionsdaten und Post-Transaktionsakten für einen zweiten Satz von Transaktionen (122), für den keine Trainingslabels generiert wurden, wobei der trainierte initiale Transaktionsklassifikator (120) basierend auf der Eingabe Klassifikatorausgaben (124) generiert;
Auswählen, durch das Computersystem (710), einer Teilmenge des zweiten Satzes von Transaktionen (122), deren Klassifikatorausgaben (124) von dem trainierten initialen Transaktionsklassifikator (120) einen Konfidenzschwellenwert erreichen;
Generieren, durch das Computersystem (710), von Trainingslabels (136) für Transaktionen in der ausgewählten Teilmenge (134) basierend auf ihren Klassifikatorausgaben (124) von dem trainierten initialen Transaktionsklassifikator (120), die den Konfidenzschwellenwert erreichen;
Trainieren, durch das Computersystem (710), eines zweiten, unterschiedlichen Transaktionsklassifikators (130) basierend auf Pre-Transaktionsdaten für die ausgewählte Teilmenge (134) des zweiten Satzes von Transaktionen (122), deren Klassifikatorausgaben (124) den Konfidenzschwellenwert erreichen, und den für Transaktionen in der ausgewählten Teilmenge (134) generierten Trainingslabels (116) basierend auf den Klassifikatorausgaben (124) der Transaktion von dem trainierten initialen Transaktionsklassifikator (120);
Speichern, durch das Computersystem (710), von Konfigurationsparametern für den trainierten zweiten Transaktionsklassifikator (130); und
wobei der trainierte zweite Transaktionsklassifikator (130) zum Klassifizieren von Transaktionen verwendet wird.

2. Verfahren nach Anspruch 1, ferner umfassend:
Klassifizieren, durch ein Transaktionsverarbeitungssystem, nach dem Speichern, einer oder mehrerer Transaktionen unter Verwendung des trainierten zweiten Transaktionsklassifikators.

3. Verfahren nach Anspruch 1, wobei das Trainieren des zweiten Transaktionsklassifikators kein Trainieren basierend auf Post-Transaktionsdaten beinhaltet.

4. Verfahren nach Anspruch 1, ferner umfassend:
Generieren, durch das Computersystem, von finalen Klassifikatorausgaben basierend auf Klassifikatorausgaben von einer Mehrzahl von trainierten Transaktionsklassifikatoren,
wobei die Mehrzahl von trainierten Transaktionsklassifikatoren den trainierten zweiten Transaktionsklassifikator und einen dritten Transaktionsklassifikator beinhaltet, der nicht unter Verwendung von Post-Transaktionsdaten trainiert wird.

5. Verfahren nach Anspruch 1, wobei Transaktionen in dem ersten Satz von Transaktionen während eines ersten Zeitintervalls stattfinden und Transaktionen in dem zweiten Satz von Transaktionen in einem zweiten Zeitintervall stattfinden, das nicht mit dem ersten Zeitintervall überlappt, wobei das zweite Zeitintervall zeitlich später als das erste Zeitintervall ist.

6. Verfahren nach Anspruch 1, wobei die Post-Transaktionsdaten für den ersten Satz von Transaktionen aus einem ersten Zeitintervall ausgewählt werden, dessen Länge basierend auf einer Zeitdifferenz zwischen einer Transaktion in dem zweiten Satz von Transaktionen und der aktuellen Zeit bestimmt wird.

7. Nichtflüchtiges computerlesbares Medium mit darauf gespeicherten Anweisungen, die von einer Rechenvorrichtung ausführbar sind, um Operationen durchzuführen, die umfassen:
Trainieren eines initialen Transaktionsklassifikators basierend auf Pre-Transaktionsdaten und Post-Transaktionsakten für einen ersten Satz von Transaktionen, für die Trainingslabels generiert wurden;
Eingeben, in den trainierten initialen Transaktionsklassifikator, von Pre-Transaktionsdaten und Post-Transaktionsakten für einen zweiten Satz von Transaktionen, für den keine Trainingslabels generiert wurden, wobei der trainierte initiale Transaktionsklassifikator basierend auf der Eingabe Klassifikatorausgaben generiert;
Auswählen einer Teilmenge des zweiten Satzes von Transaktionen, deren Klassifikatorausgaben von dem trainierten initialen Transaktionsklassifikator einen Konfidenzschwellenwert erreichen;
Generieren von Trainingslabels für Transaktionen in der ausgewählten Teilmenge basierend auf ihren Klassifikatorausgaben von dem trainierten initialen Transaktionsklassifikator, die den Konfidenzschwellenwert erreichen;
Trainieren eines zweiten, unterschiedlichen Transaktionsklassifikators basierend auf Pre-Transaktionsdaten für die ausgewählte Teilmenge des zweiten Satzes von Transaktionen, deren Klassifikatorausgaben den Konfidenzschwellenwert erreichen, und den für Transaktionen in der ausgewählten Teilmenge generierten Trainingslabels basierend auf den Klassifikatorausgaben der Transaktion von dem trainierten initialen Transaktionsklassifikator;
Speichern von Konfigurationsparametern für den trainierten zweiten Transaktionsklassifikator, um eine Verwendung des trainierten zweiten Transaktionsklassifikators beim bzw. zum Klassifizieren von Transaktionen zu ermöglichen; und
wobei der trainierte zweite Transaktionsklassifikator zum Klassifizieren von Transaktionen verwendet wird.

8. Nichtflüchtiges computerlesbares Medium nach Anspruch 7, wobei die Operationen ferner umfassen:
Klassifizieren, nach dem Speichern, einer oder mehrerer Transaktionen unter Verwendung des trainierten zweiten Transaktionsklassifikators, wobei die eine oder mehreren Transaktionen initiiert werden, nachdem Transaktionen in dem zweiten Satz von Transaktionen abgeschlossen sind.

9. Nichtflüchtiges computerlesbares Medium nach Anspruch 7, wobei die Operationen ferner umfassen:
Generieren von finalen Klassifikatorausgaben basierend auf:
Klassifikatorausgaben des trainierten zweiten Transaktionsklassifikators; und
Klassifikatorausgaben eines dritten Transaktionsklassifikators, der nicht unter Verwendung von Post-Transaktionsdaten trainiert wird;
wobei das Generieren unter Verwendung einer oder mehrerer Ensemble-Techniken durchgeführt wird.

10. Nichtflüchtiges computerlesbares Medium nach Anspruch 7, wobei Transaktionen in dem ersten Satz von Transaktionen während eines ersten Zeitintervalls stattfinden und Transaktionen in dem zweiten Satz von Transaktionen in einem zweiten Zeitintervall stattfinden, das zeitlich später als das erste Zeitintervall ist.

11. Nichtflüchtiges computerlesbares Medium nach Anspruch 7, wobei Pre-Transaktionsdaten für den ersten und zweiten Satz von Transaktionen Zugangsdaten für ein Konto beinhalten, das mit einer oder mehreren Transaktionen in dem ersten und zweiten Satz von Transaktionen verknüpft ist, und wobei Post-Transaktionsdaten für zumindest eine erste Transaktion in dem zweiten Satz von Transaktionen eine Aktivität eines Benutzers des Kontos nach dem Abschluss der ersten Transaktion beinhalten.

12. Nichtflüchtiges computerlesbares Medium nach Anspruch 7, wobei das Trainieren des zweiten Transaktionsklassifikators unter Verwendung einer oder mehrerer überwachter Techniken des maschinellen Lernens durchgeführt wird.

13. Verfahren, umfassend:
Zugreifen, durch ein Transaktionsverarbeitungssystem, auf Transaktionsdaten für eine Transaktion; und
Klassifizieren einer oder mehrerer Transaktionen, durch das Transaktionsverarbeitungssystem unter Verwendung eines trainierten Transaktionsklassifikators, der durch Operationen trainiert wird, die umfassen:
Trainieren eines initialen Transaktionsklassifikators basierend auf Pre-Transaktionsdaten und Post-Transaktionsakten für einen ersten Satz von Transaktionen, für die Trainingslabels generiert wurden;
Eingeben, in den trainierten initialen Transaktionsklassifikator, von Pre-Transaktionsdaten und Post-Transaktionsakten für einen zweiten Satz von Transaktionen, für den keine Trainingslabels generiert wurden, wobei der trainierte initiale Transaktionsklassifikator basierend auf der Eingabe Klassifikatorausgaben generiert;
Auswählen einer Teilmenge des zweiten Satzes von Transaktionen, deren Klassifikatorausgaben von dem trainierten initialen Transaktionsklassifikator einen Konfidenzschwellenwert erreichen;
Generieren von Trainingslabels für Transaktionen in der ausgewählten Teilmenge basierend auf ihren Klassifikatorausgaben von dem trainierten initialen Transaktionsklassifikator, die den Konfidenzschwellenwert erreichen;
Trainieren des Transaktionsklassifikators basierend auf Pre-Transaktionsdaten für die ausgewählte Teilmenge des zweiten Satzes von Transaktionen, deren Klassifikatorausgaben den Konfidenzschwellenwert erreichen, und den für Transaktionen in der ausgewählten Teilmenge generierten Trainingslabels basierend auf den Klassifikatorausgaben der Transaktion von dem trainierten initialen Transaktionsklassifikator.

14. Verfahren nach Anspruch 13, wobei Transaktionen in dem ersten Satz von Transaktionen während eines ersten Zeitintervalls stattfinden und Transaktionen in dem zweiten Satz von Transaktionen in einem zweiten Zeitintervall stattfinden, das zumindest einen Monat nach dem Ende des ersten Zeitintervalls beginnt, und wobei die Post-Transaktionsdaten für den ersten Satz von Transaktionen und die Post-Transaktionsdaten für den zweiten Satz von Transaktionen aus zwei unterschiedlichen Zeitintervallen ausgewählt werden, deren Länge gleich ist, wobei sich die beiden unterschiedlichen Zeitintervalle nicht überlappen.

15. Verfahren nach Anspruch 13, wobei Pre-Transaktionsdaten für zumindest eine erste Transaktion in dem zweiten Satz von Transaktionen Transaktionsdaten beinhalten, die mit einer oder mehreren Transaktionen verknüpft sind, die vor der ersten Transaktion in dem zweiten Satz von Transaktionen initiiert wurden, und wobei Post-Transaktionsdaten für zumindest eine erste Transaktion in dem zweiten Satz von Transaktionen Standortinformationen einer Benutzervorrichtung, welche die erste Transaktion initiiert hat, nach dem Abschluss der ersten Transaktion beinhalten.

## Revendications

1. Procédé, comprenant :
entraîner, par un système informatique (710), un classifieur de transaction initial (110) en fonction de données pré-transaction et de données post-transaction pour un premier ensemble de transactions (114) pour lesquelles des étiquettes d'entraînement (116) ont été générées ;
entrer, par le système informatique (710) vers le classifieur de transaction initial entraîné (120), des données pré-transaction et des données post-transaction pour un second ensemble de transactions (122) pour lesquelles des étiquettes d'entraînement n'ont pas été générées, dans lequel le classifieur de transaction initial entraîné (120) génère des sorties de classifieur (124) en fonction de l'entrée ;
sélectionner, par le système informatique (710), un sous-ensemble (134) du second ensemble de transactions (122) dont les sorties de classifieur (124) provenant du classifieur de transaction initial entraîné (120) satisfont un seuil de confiance ;
générer, par le système informatique (710), des étiquettes d'entraînement (136) pour des transactions dans le sous-ensemble sélectionné (134) en fonction de leurs sorties de classifieur (124) provenant du classifieur de transaction initial entraîné (120) qui satisfont le seuil de confiance ;
entraîner, par le système informatique (710), un deuxième classifieur de transaction différent (130) en fonction de données pré-transaction pour le sous-ensemble sélectionné (134) du second ensemble de transactions (122) dont les sorties de classifieur (124) satisfont le seuil de confiance et les étiquettes d'entraînement (136) générées pour des transactions dans le sous-ensemble sélectionné (134) en fonction des sorties de classifieur (124) de la transaction provenant du classifieur de transaction initial entraîné (120) ;
stocker, par le système informatique (710), des paramètres de configuration pour le deuxième classifieur de transaction entraîné (130) ; et dans lequel le deuxième classifieur de transaction entraîné (130) est utilisé pour classifier des transactions.

2. Procédé selon la revendication 1, comprenant en outre :
classifier, par un système de traitement de transaction, à la suite du stockage, une ou plusieurs transactions en utilisant le deuxième classifieur de transaction entraîné.

3. Procédé selon la revendication 1, dans lequel l'entraînement du deuxième classifieur de transaction n'inclut pas d'entraînement en fonction de données post-transaction.

4. Procédé selon la revendication 1, comprenant en outre :
générer, par le système informatique, des sorties de classifieur finales en fonction de sorties de classifieur provenant d'une pluralité de classifieurs de transaction entraînés,
dans lequel la pluralité de classifieurs de transaction entraînés inclut le deuxième classifieur de transaction entraîné et un troisième classifieur de transaction qui n'est pas entraîné en utilisant des données post-transaction.

5. Procédé selon la revendication 1, dans lequel des transactions dans le premier ensemble de transactions se produisent au cours d'un premier intervalle de temps et des transactions dans le second ensemble de transactions se produisent dans un second intervalle de temps qui ne chevauche pas le premier intervalle de temps, dans lequel le second intervalle de temps est ultérieur au premier intervalle de temps.

6. Procédé selon la revendication 1, dans lequel les données post-transaction pour le premier ensemble de transactions sont sélectionnées parmi un premier intervalle de temps dont la longueur est déterminée en fonction d'une différence temporelle entre une transaction dans le second ensemble de transactions et l'heure actuelle.

7. Support non transitoire lisible par ordinateur ayant des instructions stockées sur lui qui sont exécutables par un dispositif informatique pour réaliser des opérations comprenant :
entraîner un classifieur de transaction initial en fonction de données pré-transaction et de données post-transaction pour un premier ensemble de transactions pour lesquelles des étiquettes d'entraînement ont été générées ;
entrer, vers le classifieur de transaction initial entraîné, des données pré-transaction et des données post-transaction pour un second ensemble de transactions pour lesquelles des étiquettes d'entraînement n'ont pas été générées, dans lequel le classifieur de transaction initial entraîné génère des sorties de classifieur en fonction de l'entrée ;
sélectionner un sous-ensemble du second ensemble de transactions dont les sorties de classifieur provenant du classifieur de transaction initial entraîné satisfont un seuil de confiance ;
générer des étiquettes d'entraînement pour des transactions dans le sous-ensemble sélectionné en fonction de leurs sorties de classifieur provenant du classifieur de transaction initial entraîné qui satisfont le seuil de confiance ;
entraîner un deuxième classifieur de transaction différent en fonction de données pré-transaction pour le sous-ensemble sélectionné du second ensemble de transactions dont les sorties de classifieur satisfont le seuil de confiance et les étiquettes d'entraînement générées pour des transactions dans le sous-ensemble sélectionné en fonction des sorties de classifieur de la transaction provenant du classifieur de transaction initial entraîné ;
stocker des paramètres de configuration pour le deuxième classifieur de transaction entraîné pour permettre l'utilisation du deuxième classifieur de transaction entraîné dans la classification de transactions ; et dans lequel le deuxième classifieur de transaction entraîné est utilisé pour classifier des transactions.

8. Support non transitoire lisible par ordinateur selon la revendication 7, dans lequel les opérations comprennent en outre :
classifier à la suite du stockage, une ou plusieurs transactions en utilisant le deuxième classifieur de transaction entraîné, dans lequel la ou les transactions sont initiées après que des transactions dans le second ensemble de transactions sont achevées.

9. Support non transitoire lisible par ordinateur selon la revendication 7, dans lequel les opérations comprennent en outre :
générer des sorties de classifieur final en fonction de :
sorties de classifieur du deuxième classifieur de transaction entraîné ; et
sorties de classifieur d'un troisième classifieur de transaction qui n'est pas entraîné en utilisant des données post-transaction ;
dans lequel la génération est réalisée en utilisant une ou plusieurs techniques d'ensemble.

10. Support non transitoire lisible par ordinateur selon la revendication 7, dans lequel des transactions dans le premier ensemble de transactions se produisent au cours d'un premier intervalle de temps et des transactions dans le second ensemble de transactions se produisent dans un second intervalle de temps qui est ultérieur au premier intervalle de temps.

11. Support non transitoire lisible par ordinateur selon la revendication 7, dans lequel des données pré-transaction pour le premier et second ensemble de transactions incluent une accréditation de compte pour un compte associé à une ou plusieurs transactions dans le premier et second ensemble de transactions, et dans lequel des données post-transaction pour au moins une première transaction dans le second ensemble de transactions incluent l'activité d'un utilisateur du compte à la suite de l'achèvement de la première transaction.

12. Support non transitoire lisible par ordinateur selon la revendication 7, dans lequel l'entraînement du deuxième classifieur de transaction est réalisé en utilisant une ou plusieurs techniques d'apprentissage automatique supervisé.

13. Procédé, comprenant :
accéder, par un système de traitement de transaction, à des données de transaction pour une transaction ; et
classifier une ou plusieurs transactions, par le système de traitement de transaction en utilisant un classifieur de transaction entraîné, entraîné par des opérations comprenant :
entraîner un classifieur de transaction initial en fonction de données pré-transaction et de données post-transaction pour un premier ensemble de transactions pour lesquelles des étiquettes d'entraînement ont été générées ;
entrer, vers le classifieur de transaction initial entraîné, des données pré-transaction et des données post-transaction pour un second ensemble de transactions pour lesquelles des étiquettes d'entraînement n'ont pas été générées, dans lequel le classifieur de transaction initial entraîné génère des sorties de classifieur en fonction de l'entrée ;
sélectionner un sous-ensemble du second ensemble de transactions dont les sorties de classifieur provenant du classifieur de transaction initial entraîné satisfont un seuil de confiance ;
générer des étiquettes d'entraînement pour des transactions dans le sous-ensemble sélectionné en fonction de leurs sorties de classifieur provenant du classifieur de transaction initial entraîné qui satisfont le seuil de confiance ; et
entraîner le classifieur de transaction en fonction de données pré-transaction pour le sous-ensemble sélectionné du second ensemble de transactions dont les sorties de classifieur satisfont le seuil de confiance et les étiquettes d'entraînement générées pour des transactions dans le sous-ensemble sélectionné en fonction des sorties de classifieur de la transaction provenant du classifieur de transaction initial entraîné.

14. Procédé selon la revendication 13, dans lequel des transactions dans le premier ensemble de transactions se produisent au cours d'un premier intervalle de temps et des transactions dans le second ensemble de transactions se produisent dans un second intervalle de temps qui commence au moins un mois après la fin du premier intervalle de temps, et dans lequel les données post-transaction pour le premier ensemble de transactions et les données post-transaction pour le second ensemble de transactions sont sélectionnées parmi deux intervalles de temps différents dont les longueurs sont les mêmes, dans lequel les deux intervalles de temps différents ne se chevauchent pas.

15. Procédé selon la revendication 13, dans lequel des données pré-transaction pour au moins une première transaction dans le second ensemble de transactions incluent des données de transaction associées à une ou plusieurs transactions qui ont été initiées avant la première transaction dans le second ensemble de transactions, et dans lequel des données post-transaction pour au moins une première transaction dans le second ensemble de transactions incluent des informations d'emplacement d'un dispositif utilisateur qui a initié la première transaction à la suite de l'achèvement de la première transaction.
